# EUROPEAN PATENT SPECIFICATION

(11) **EP 1 414 627 B1**
(45) Date of publication and mention of the grant of the patent: **01.03.2006**
(21) Application number: 02754700.9
(22) Date of filing: 18.06.2002
(51) Int. Cl.: B27C 5/10, B23Q 16/00

(54) **APPARATUS FOR SETTING OF A ZERO-REFERENCE POINT**
VORRICHTUNG ZUR EINSTELLUNG EINES NULL-BEZUGSPUNKTES
APPAREIL POUR ETABLIR LE POINT DU ZERO DE REFERENCE

(30) Priority: 20.06.2001 GB 0115048
(43) Date of publication of application: 06.05.2004
(73) Proprietor: Black & Decker Inc., Newark DE 19711 (US); Bone, Daniel, CO Durham DH7 8LW (GB)
(72) Inventor: BONE, Daniel, CO Durham DH7 8LW (GB)
(74) Representative: Shaya, Darrin Maurice
(86) International application number: PCT/EP2002/006709
(87) International publication number: WO 2003/000473

(56) References cited:
- US-A- 4 272 821
- US-A- 5 320 463
- PATENT ABSTRACTS OF JAPAN vol. 014, no. 247 (M-0978), 25 May 1990 (1990-05-25) & JP 02 069203 A (HITACHI KOKI CO LTD), 8 March 1990 (1990-03-08)

## Description

The present invention relates to apparatus for setting a so-called "zero-reference point" and has particular, although not exclusive, relevance to use of such apparatus in the field of power tools in general and routers in particular (see for example US-A-4 272 821).

Referring to use of routers, with which tools a specific cross-sectional shape is formed in a workpiece, there is usually (if not always) the need to accurately set the depth to which the rotating bit (which causes removal of stock from the workpiece to leave the resulting shape formed therein) penetrates the workpiece.

The conventional method of setting this depth of cut is to employ a simple linear, straight-line scale on the body of the router. To this scale can be visually compared and adjustable depth stop. Hence moving of the depth stop to the required penetration of the router bit within the workpiece requires two operations. First, the depth-stop must be set at a "zero-reference point", this is the initial setting against which the actual depth for the router bit to be set must be compared (although those skilled in the art will appreciate that the numerical value of this "zero-reference point" need not actually be zero). Secondly, the depth stop is moved away from this zero-reference point by a distance which equates directly to the required depth of cut of the router bit.

It will be appreciated that although not necessary there is real advantage to having the datum value which represents the zero-reference point itself having a value of zero. This enables the user to easily set the required depth of cut.

Problems can easily arise, however, when there is a need to set a second depth of cut subsequent to the first. There are two options for the user. Either they need to move the depth stop back to the zero-reference point and re-set the depth stop to the required new depth of cut, or they need to make the current position of the depth stop (relative to the scale) into a new zero-reference point from which the second depth of cut position for the depth stop can be calculated.

Neither of these alternatives is particularly desirous as they are time consuming, Indeed, the latter alternative can be prone to error as it often involves mental arithmetic on behalf of the user.

It would be desirous, therefore, to provide a means by which the depth stop could be accurately set and which point once set, may then easily be converted or made into the new zero-reference point without the need for either further movement of the depth stop or re-calculation.

A further situation can arise in the use of such a power tool when the user needs to change the current router bit for a new one. It is usually the case that the length of the new router bit is unlikely to be the same as that of the current one and so in this case the user needs to re-set the zero reference point for the new router bit. With a conventional linear, straight-line scale this would mean completely re-setting the whole set up of the router to align the depth stop with the new zero-reference point. This, therefore, means moving the depth stop to its new zero-reference point.

It is thus an object of the present invention to at least obviate the above shortcomings by provision of an apparatus for setting of a zero-reference point which does not require re-calculation of the zero-reference point. It is also an object of the present invention to provide a power tool including such an apparatus.

According to one aspect of the present invention therefore there is provided apparatus for setting of a zero-reference point of a power tool comprising an adjustable reference marker; and a scale for correlation with the reference marker; the apparatus characterised in that the reference marker is moveable linearly relative to the power tool, and in that the scale is translatable relative to the power tool such that whatever the position of the adjustable reference marker relative to the power tool, the scale may be translated to define a zero-reference point with respect to that position of the adjustable reference marker. By employment of the scale which is translatable relative to power tool then it is possible to re-set the zero reference point regardless of the position in which the adjustable reference marker is relative to the power tool. This means that there is no longer a need for the user to re-calculate the zero-reference point or return the reference marker to the original zero-reference point in order for a further adjustment to the required depth stop to be made.

Preferably the scale is rotatable relative to the power tool.

Preferably there are defined two axes: the first axis along which the adjustable reference marker may move linearly, and; a second axis, which second axis is parallel to the first axis, and about which second axis the scale may rotate. By providing a first axis along which the adjustable reference marker moves linearly and a second axis about which the scale rotates, wherein the first and second axes are parallel to one another, then the ability for the reading of the position of the reference marker relative to a selected position on the rotatable scale is made available.

In a preferred embodiment the scale carries a plurality of datum points each of which differs in value from its adjacent datum point or points by a predetermined amount. Furthermore, it is possible for the scale to be tubular and the plurality of datum points to be arranged as a grid wrapped around the tubular scale. In addition, the grid of datum points may comprise an array of rows and columns wherein the datum points in any given row are arranged as an arithmetic series and the datum point in any given column are arranged as an arithmetic series. These features provide for the ease of re-setting of the zero-reference point by simply rotating the scale to the required datum point relative to the position of the reference marker at that point. Furthermore, by providing a grid structure a compact and easy to read arrangement for the scale is provided.

Preferably any given datum value can be traced across the grid by moving incrementally by one datum point along a row and also moving incrementally by one datum point along a column. This means that the user will be able to move incrementally from one datum value to its adjacent one by simply rotating the tubular member or translating the scale.

Preferably the scale is housed within the turret which prevents damage being done to the scale during use of the apparatus.

Additionally, the scale may be held captive within the turret so as to only rotate therewithin. By allowing the scale only to rotate within the turret, the need for complex operations by the user are avoided.

The scale may be rotatable in incremental steps only. Furthermore, each incremental step may rotate the scale by either one row or one column. According to further aspect of invention is provided a power tool including an apparatus as defined above.

The invention will now be described, by way of example only, and with reference to the accompanying drawings of which:
Figure 1 illustrates a schematic view of a known router employing a known depth stop mechanism;
Figure 2 shows a perspective view of an apparatus in accordance with the present invention, and;
Figure 3 shows the apparatus of figure 2, but with the scale removed therefrom to illustrate the grid structure shown thereon more clearly;
Figure 4 shows a schematic illustration of a scale employed in the embodiment of figures, and;
Figure 5 illustrates schematically an alternative structure for the scale to that of figures 2-4.

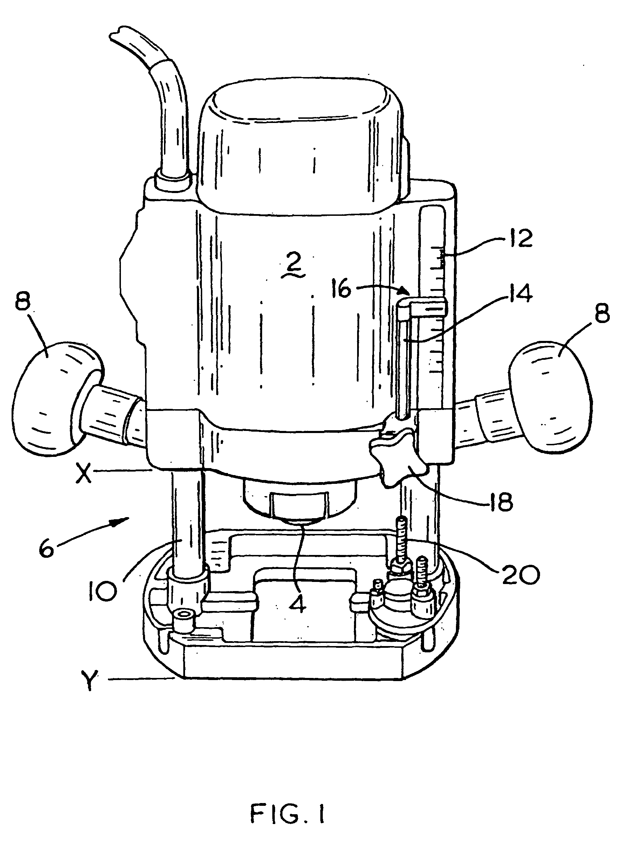

Referring firstly to figure 1 which illustrates a prior art router and depth stop mechanism it can be seen that a router comprises a body (2) which houses an electric motor (not shown). The motor is actuable to rotate an output collet (4) within which may be clamped a router bit or the like. Although the router bit is not shown in the attached drawings the structure thereof will be readily apparent to those skilled in the art. Router bits are, as is known, chosen to provide to a workpiece a pre-defined cross sectional shape or dimension when the rotating bit is sunk into or passed through the workpiece.

The router also includes an adjustable plunge mechanism shown generally as (6) which allows adjustment of the depth to which a router bit may be plunged into a workpiece. The plunge mechanism comprises locking side handles (8) and a spring-biased carriage (10) so that on release of the side handles (8) the distance between the lower portion of the body (2) (illustrated by .....X in the figure) and the workpiece (denoted by ........Y) may be adjusted. Once this adjustment has been made to the right depth then the side handles (8) may be locked in that position.

The router body also carries a linear scale (12) (in this example showing increments of 1mm) against which a depth stop (14) may be compared. The position of the upper surface (16) of the depth stop relative to the linear scale (12) may be viewed by the user to determine the depth of cut of the router bit into the workpiece, as is known. The depth stop (14) is adjustable by way of a screwthreaded locking nut (18) to either clamp or release the depth stop against movement.

The lower surface of the depth stop (18) eventually abuts against a pillar (20) standing proud of the plunge mechanism (6) in order to prevent the router body (2) moving further down than the limits set by the combination of the pillar (20) depth stop (14) and locking nut (18).

For a user to accurately set the depth stop to determine the depth of cut of a router bit first the depth stop upper surface (16) needs to be brought into correlation with the zero reference point of the scale (12). Once this has been achieved, then the locking nut (18) is released and the depth stop (14) moved relative to the scale by the amount to which the depth of cut is required. Once this has been achieved, then the locking nut (18) is tightened and the depth stop held rigidly captive. When the side handles (8) are released and the user applies pressure thereto, the distance between X and Y is reduced until the bottom of the depth stop (14) abuts the top of the pillar (20).

As will be understood by those skilled in the art the zero reference point on the scale (12) as shown in figure 1 is at the very bottom of the scale in order to ensure that the depth of cut required (as determined by the amount to which the depth stop (14) is moved upwards in the figure relative to the scale) is provided by the distance between the upper surface of the pillar (20) and the lower surface of the depth stop (14).

If a further adjustment to the depth of cut is required this can be arithmetically problematic for users because it means moving the depth stop (14) relative to its final position rather than any more simple mechanism. Alternatively, the user has to re-set the entire depth stop by reference to the original zero reference point all over again.

Either of these tasks can be time consuming or problematic. All of the above is well known to those skilled in the art.

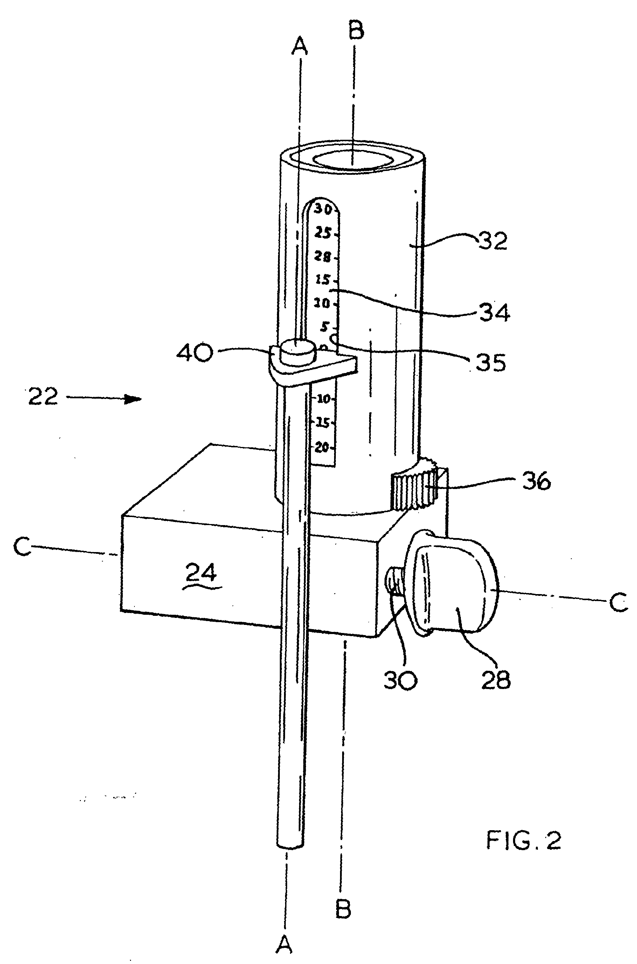

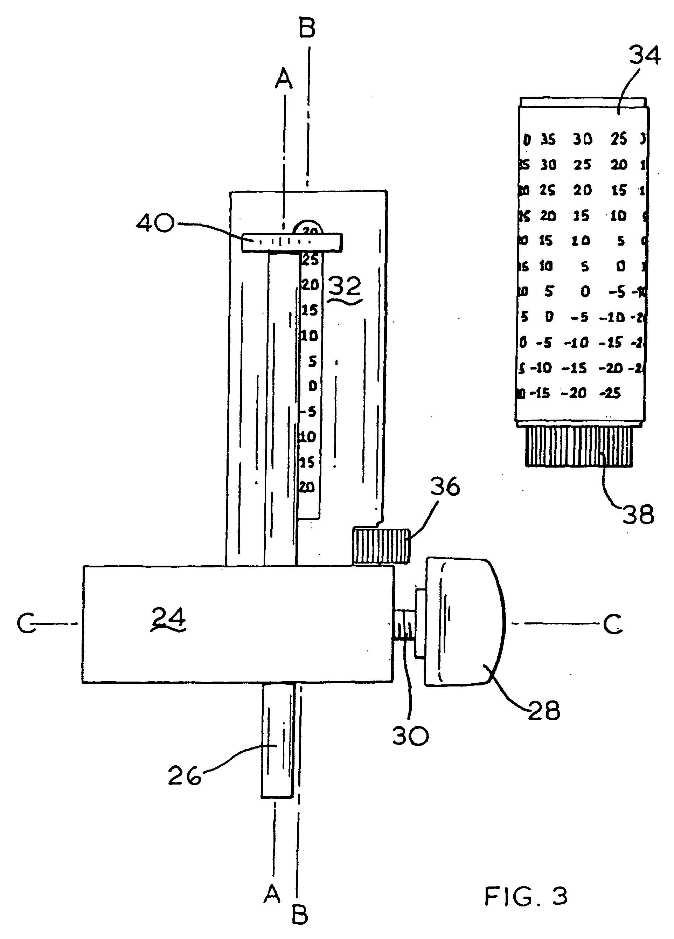

Referring now to figures 2 and 3, wherein an embodiment of the present invention is described, it can be seen that the apparatus shown generally as (22) is intended to replace the entire depth stop (14) and scale (12) as shown in figure 1.

The apparatus (22) comprises a mounting block (24) which is arranged to either be formed integrally with or attached to the body (2) of the router as shown in figure 1. The mounting block has a hole formed therethrough and through this hole may pass a reference member, in this case depth stop (26). It can be seen that the depth stop (26) is able to move linearly through the hole along the axis A-A as shown in figure 2. Mounted along an axis C-C, which is orthogonal to the axis A-A, is a locking member (28) which is mounted to the mounting block (24) by way of a screwthreaded shank (30). Release of the locking member (28) permits linear movement of the depth stop (26) along the axis A-A. When the locking member (28) is tightened the remote end of the shank (30) abuts the depth stop (26) thereby preventing movement along the axis A-A. Attached to or integrally mounted with the mounting block (24) is a turret (32) within which is housed a scale (34). In this example, the turret (32) is tubular and mounted on a central axis B-B. The scale (34) is chosen either to be tubular or wrapped around a tubular member (in the event of the scale (34) being printed on paper, for example) and the entire scale (34) is able to rotate within the turret (32), again around the axis B-B. The axes A-A and B-B are parallel.

Mounted to the mounting block (24) is a finger-rotatable cog (36). The cog (36) engages with a corresponding cog (38) formed at the lower surface of the scale as shown in figure 3. By this means, therefore, rotation of the finger cog (36) achieves concomitant rotation of the scale (34) because the scale (34) and cog (38) are not permitted any relative rotation therebetween.

It will be understood by those skilled in the art that the scale (34) may itself be a tubular member of which the cog (38) forms a part or could, for example, be a printed sheet of paper mounted on a bobbin of which the cog (38) forms part or is attached.

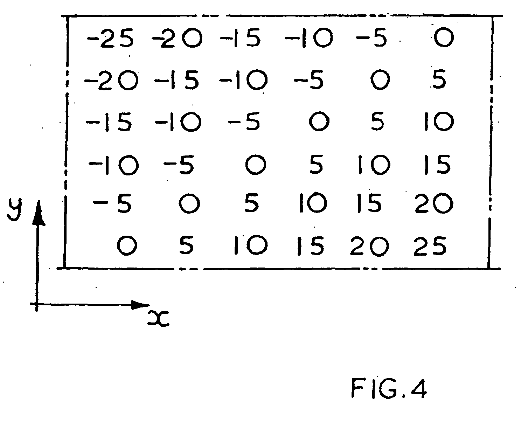

Referring particularly now to figures 3 and 4, the scale (34) is shown in more detail. The scale (34) is chosen to carry a plurality of datum points which may or may not represent units of measurement such as millimetres, inches, etc. The choice of datum points is arbitrary but in the example shown each datum point represents a value of 5mm. It is important to note that in the scale shown in the drawings each datum point does not represent an absolute value itself but is to be read in conjunction with its next nearest neighbour to provide an indication of relative displacement.

Looking at figure 4 in particular, it can be seen that the scale (34) is chosen as a grid and in this example the grid comprises a plurality of parallel rows and parallel columns. In figure 4 the rows are shown along the x-axis and the columns are shown along the y-axis.

It can be seen that, starting from any point on any row or column and moving in a straight line, either horizontally or vertically, that is along x- or y-axes, increments or decrements of 5mm are shown. Whilst the datum points on the grid are indeed separated from the next nearest neighbour either horizontally or vertically by 5mm this, again, is arbitrary. The value of each datum point can and, in this example, is chosen to provide an accurate scale for measurement.

It will be understood that the movement along any row or column is movement along an arithmetical progression which provides the ability for a scale to be used in accordance with the present invention.

Considering, in particular, figure 2 now it can be seen that the upper surface of the depth stop (14) terminates in a reference marker (40). The reference marker (40) in figure 2 is shown to be against the datum point zero and this therefore provides the zero-reference point.

If one were to now loosen the locking member (28) and move the depth stop (26) up, say, 15mm, then the reference marker (40) would be adjacent the upper datum point 15 which is, in fact, 3 datum points above the position shown in figure 2.

If, having worked at this particular depth of cut the user then wishes to choose a new depth of cut rather than have to work out arithmetically to which new point along the scale (34) the reference marker (40) needs to be moved to (bearing in mind that the zero point at this moment is now datum point 15) the user does the following:

The user rotates the finger cog (36) to move the datum points shown in the window (35) formed within the turret (32). Rotation is continued until the zero datum value is seen adjacent the reference marker (40).

It can be seen that only one column of the scale (34) is visible in the turret (32). The window (35) is chosen to permit only one column of the grid of the scale (34) to be visible. If another column needs to be viewed, the scale needs to be rotated as described above. Adjacent reference marker (40) (which has not moved) is the datum point zero. This position of the reference marker (40) relative to the scale (34) is now the new zero reference point and depth of cut of the router bit can be adjusted quite simply by unscrewing the locking member (28) to allow movement of the depth stop (26) by the required number of millimetres which equate exactly to the new depth of cut. Clearly, therefore, the reference marker (40) will move relative to the scale against which it is currently positioned at a new zero reference point represented by datum value zero.

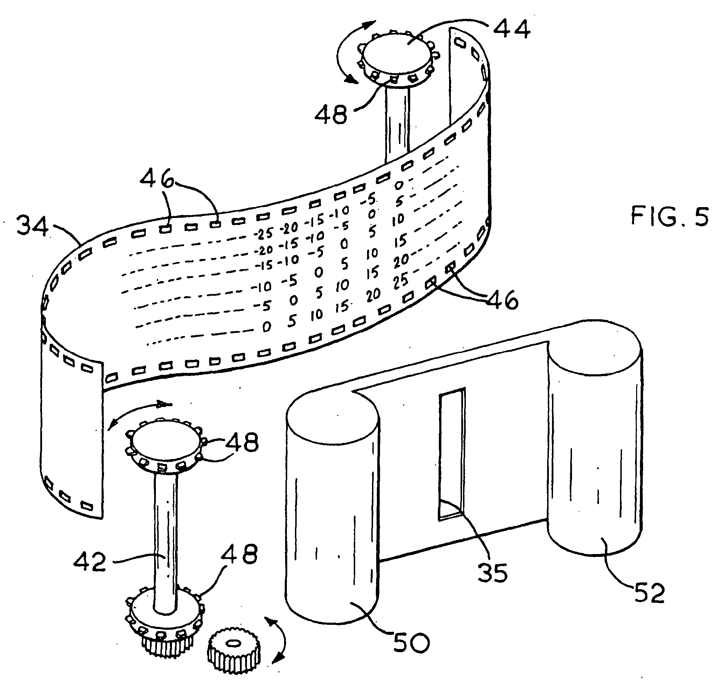

Reference now to figure 5 illustrates another embodiment of scale employed to effect the present invention, but which embodiment operates by linear movement relative to the reference point rather than rotation, as is the case with the embodiments of figures 1 and 3. The scale of figure 5 is the same structure as that of figures 2 and 3, but is translated relative to the reference point by linear movement rather than by rotation. It will be understood that by "translated" in meant performing relative movement such as linear movement, rotation etc between the scale (34) and the depth stop (26).

It can be seen that the scale (34) of figure 5 is again a grid structure as in figure 4, but this time is formed onto two spools (42 and 44). The scale (34) has formed at the top and bottom therein a plurality of guide holes (46) each of which is arranged to be able to be penetrated by spiked projections (48) formed on the upper and lower surfaces of each respective spool (42 and 44). In this manner, therefore, (and this is known in the art) rotation of the pulling spool, for example 42, will cause the scale (34) to be wrapped around the spool (42) thereby advancing the grid past and within the viewing window (35). This type of spool advancement is known from, for example, the photographic industry where camera film is stored and moved in this manner. As this method of storing and advancing of a tape is well known, it will not be described here any more.

To move the grid on the scale (34) back in the opposite direction, of course, it is simply a case of pulling the scale (34) via the other spool (44).

It will be appreciated that the spools (42 and 44) fit within respective canister holdings (50 and 52) and that the scale (34) is visible via the window (35) as was the case with figures 2 and 3.

It will also be appreciated by those skilled in the art that in another method of setting the depth of cut, the user effectively defines a zero-reference datum after a router bit (not shown) housed within the collet (4) has been changed or re-positioned therewithin. To effect this, the user releases the locking side-handles (8) to urge the motor housing (2) and the new bit held within the collet (4) down along the plunge mechanism (6) until the lower end of the router bit contacts the upper surface of the workpiece to be worked upon.

The body (2) is then locked in position by the side handles (8) at this position along the plunge mechanism (6). Then the knob (18) is released and the depth stop (14) adjusted so that its lower surface abuts the upper surface of pillar (20) thereby setting this particular depth of cut.

It is then a matter of rotating the cog wheel (36) (in the examples of figures 2 and 3), or the spool (42 or 44) to translate the position of the scale (34) as seen by the viewing window (35) (with reference to figure 5) in order to align the selected zero datum on the translatable scale (34) against the upper surface (16) of the depth stop. At this time, the scale (34) denotes an absolute reference position for the bit held within the collet (4) relative to the workpiece.

To achieve the desired depth of cut, the depth stop (14) is then raised by first of all unlocking the locking nuts (18), to its desired position as read from the desired datum point on the scale (34) and locked in this new position by tightening the locking nut (18). The depth of cut of the router 2 has then been accurately set such that the bit will be able to progressively enter the workpiece until this desired depth of cut is achieved and the lower portion of the depth stop (14) abuts the upper portion of the pillar (20) thereby preventing any further downward motion of the router and hence the router bit held within the collet (4).

Those skilled in the art will appreciate that the absolute datum values on the grid of the scale (34) are arbitrary. In the example shown the spacings are set to be 5mm, but any incremental scale can be chosen. Indeed metric or imperial units can, of course, be easily accommodated in the present invention.

It will also be understood by those skilled in the art that the translation or movement of the scale may be either linear or rotational dependent upon factors such as the space available or the range of movement that is necessary. Clearly for a rotatable scale a smaller range of grid values will be possible because the linear length of the grid will be determined by the circumference of the turret (32). Whereas with a spooled scale such as the one shown on figure 5, the extent of the scale may be greater due to the spooled arrangement.

## Claims

1. Apparatus for setting of a zero-reference point of a power tool comprising:
an adjustable reference marker; and a scale (12, 34) for correlation with the reference marker;
the apparatus **characterised in that** the reference marker is moveable linearly relative to the power tool, and **in that** the scale is translatable relative to the power tool such that whatever the position of the adjustable reference marker relative to the power tool, the scale may be translated to define a zero-reference point with respect to that position of the adjustable reference marker.

2. Apparatus according to claim 1 wherein the scale (34) is rotatable relative to the power tool.

3. Apparatus according to claim 3 wherein there are defined two axes: a first axis (A-A) along which the adjustable reference marker may move linearly, and;
a second axis (B-B) which second axis is parallel to the first axis, and about which second axis the scale may rotate.

4. Apparatus according to any one of the preceding claims wherein the scale (34) carries a plurality of datum points, each of which differs in value from its adjacent datum point or points by a predetermined amount.

5. Apparatus according to claim 4 wherein the scale is tubular and the plurality of datum points are arranged as a grid wrapped around the tubular scale.

6. Apparatus according to claim 5 wherein the grid of datum points comprises an array of rows and columns wherein the datum points in any given row are arranged as an arithmetic series and the datum points in any given column are arranged as an arithmetic series.

7. Apparatus according to claim 6 wherein any given datum value can be traced across the grid by moving incrementally by one datum point along a row and also by moving incrementally by one datum point along a column.

8. Apparatus according to any one of the preceding claims wherein the scale (34) is housed within a turret (32).

9. Apparatus according to claim 8 where appendant to claim 2 wherein the scale (34) is held captive within the turret and is able to rotate therewithin.

10. Apparatus according to any one of the preceding claim wherein the scale (34) is translatable in incremental steps.

11. Apparatus according to claim 9 when appendant to any one of claims 6-10 when appendant to claim 2 wherein each incremental step rotates the scale (34) by either one row or one column.

12. A power tool including apparatus according to any one of claims 1-11.

## Patentansprüche

1. Vorrichtung zur Einstellung eines Null-Bezugspunkts eines angetriebenen Werkzeugs mit
einer einstellbaren Bezugsmarkierung und einer Skala (12, 34) zur Zuordnung zur Bezugsmarkierung,
**dadurch gekennzeichnet, dass** die Bezugsmarkierung geradlinig bezüglich dem angetriebenen Werkzeug bewegbar ist und dass die Skala bezüglich dem angetriebenen Werkzeug verstellbar ist, so dass sie zur Bildung eines Null-Bezugspunkts bezüglich der Stellung der einstellbaren Bezugsmarkierung, unabhängig von der Stellung der einstellbaren Bezugsmarkierung, verstellt werden kann.

2. Vorrichtung nach Anspruch 1, bei der die Skala (34) bezüglich dem angetriebenen Werkzeug drehbar ist.

3. Vorrichtung nach Anspruch 2, bei der zwei Achsen gebildet sind, eine erste Achse (A-A), entlang der die einstellbare Bezugsmarkierung sich geradlinig bewegen kann, und eine zweite Achse (B-B), die sich parallel zur ersten Achse erstreckt und um die sich die Skala drehen kann.

4. Vorrichtung nach einem der vorhergehenden Ansprüche, bei der die Skala (34) mehrere Bezugspunkte aufweist, von denen jeder sich in seinem Wert um einen vorbestimmten Betrag von seinem benachbarten Bezugspunkt oder seinen benachbarten Bezugspunkten unterscheidet.

5. Vorrichtung nach Anspruch 4, bei der die Skala rohrförmig ist und die mehreren Bezugspunkte als um die rohrförmige Skala gewickeltes Gitter angeordnet sind.

6. Vorrichtung nach Anspruch 5, bei der das Gitter von Bezugspunkten eine Anordnung von Reihen und Spalten aufweist, wobei die Bezugspunkte einer Reihe als arithmetische Reihe und die Bezugspunkte einer Spalte als arithmetische Reihe angeordnet sind.

7. Vorrichtung nach Anspruch 6, bei der eine gegebene Bezugsgröße durch schrittweise Bewegung um einen Bezugspunkt entlang einer Reihe und auch um schrittweise Bewegung um einen Bezugspunkt entlang einer Spalte gesucht wird.

8. Vorrichtung nach einem der vorhergehenden Ansprüche, bei der die Skala (34) in einem Drehkopf (32) angeordnet ist.

9. Vorrichtung nach Anspruch 8, wenn auf Anspruch 2 rückbezogen, bei der die Skala (34) innerhalb des Drehkopfs gehalten ist und sich innerhalb diesem drehen kann.

10. Vorrichtung nach einem der vorhergehenden Ansprüche, bei der die Skala (34) schrittweise verstellbar ist.

11. Vorrichtung nach Anspruch 9, wenn auf einen der Ansprüche 6 bis 10 rückbezogen, wenn diese auf Anspruch 2 rückbezogen sind, bei der jeder Schritt die Skala (34) entweder um eine Reihe oder um eine Spalte dreht.

12. Angetriebenes Werkzeug mit einer Vorrichtung gemäß einem der Ansprüche 1 bis 11.

## Revendications

1. Appareil pour établir le point de référence zéro d'un outil motorisé, comprenant :
un marqueur de référence réglable, et une échelle (12, 34) pour établir une corrélation avec le marqueur de référence ;
l'appareil étant **caractérisé en ce que** le marqueur de référence est déplaçable de façon linéaire par rapport à l'outil motorisé, et **en ce que** l'échelle est translatable par rapport à l'outil motorisé, de manière que, quelle que soit la position du marqueur de référence réglable par rapport à l'outil motorisé, l'échelle puisse être déplacée en translation, pour définir un point de référence zéro par rapport à cette position du marqueur de référence réglable.

2. Appareil selon la revendication 1, dans lequel l'échelle (34) est susceptible de tourner par rapport à l'outil motorisé.

3. Appareil selon la revendication 3, dans lequel sont définis deux axes : un premier axe (A-A), le long duquel le marqueur de référence réglable peut se déplacer de façon linéaire, et ;
un deuxième axe (B-B), qui est parallèle au premier axe, et autour duquel l'échelle peut tourner.

4. Appareil selon l'une quelconque des revendications précédentes, dans lequel l'échelle (34) porte une pluralité de points de donnée de référence, dont chacun diffère en valeur de son point ou de ses points de donnée de référence adjacent(s), ceci d'une quantité prédéterminée.

5. Appareil selon la revendication 4, dans lequel l'échelle est tubulaire et la pluralité de points de donnée de référence est agencée sous forme de grille, enveloppée autour de l'échelle tubulaire.

6. Appareil selon la revendication 5, dans lequel la grille de points de donnée de référence comprend une matrice de rangées et de colonnes, dans lequel les points de donnée de référence, dans une ligne donnée quelconque, étant agencés sous forme de série arithmétique et les points de donnée de référence, dans une colonne donnée quelconque, étant agencés sous forme de série arithmétique.

7. Appareil selon la revendication 6, dans lequel toute valeur de donnée de référence donnée peut être tracée sur la grille, par déplacement incrémentiel, de la valeur d'un point de donnée de référence, le long d'une ligne et, également, par déplacement incrémentiel, de la valeur d'un point de donnée de référence, le long d'une colonne.

8. Appareil selon l'une quelconque des revendications précédentes, dans lequel l'échelle (34) est logée dans une tourelle (32).

9. Appareil selon la revendication 8, lorsqu'elle dépend de la revendication 2, dans lequel l'échelle (34) est maintenue captive à l'intérieur de la tourelle et est en mesure de tourner à l'intérieur de celle-ci.

10. Appareil selon l'une quelconque des revendications précédentes, dans lequel l'échelle (34) est translatable par étapes incrémentielles.

11. Appareil selon la revendication 9, lorsqu'elle dépend de l'une quelconque des revendications 6 à 10, lorsqu'elle dépend de la revendication 2, dans lequel chaque étape incrémentielle fait tourner l'échelle (34), soit de la valeur d'une ligne, soit de la valeur d'une colonne.

12. Outil motorisé incluant un appareil selon l'une quelconque des revendications 1 à 11.
